# EUROPÄISCHE PATENTSCHRIFT

(11) **EP 0 318 819 B1**
(45) Veröffentlichungstag und Bekanntmachung des Hinweises auf die Patenterteilung: **06.04.1994**
(21) Anmeldenummer: 88119522.6
(22) Anmeldetag: 24.11.1988
(51) Int. Cl.: C09B 67/10, C09B 67/04

(54) **Verfahren zur Herstellung farbstarker und kornweicher Lackpigmente**
Process for the manufacture of a lake pigment in the form of soft particles with a high colouring capability
Procédé de fabrication de pigments pour laques à fort pouvoir colorant et à grains mous

(30) Priorität: 03.12.1987 DE 3740977
(43) Veröffentlichungstag der Anmeldung: 07.06.1989
(73) Patentinhaber: BASF Aktiengesellschaft, 67063 Ludwigshafen (DE)
(72) Erfinder: Kranz, Joachim, Dr., D-6700 Ludwigshafen (DE); Wiesenberger, Alois, D-6715 Lambsheim (DE)

(56) Entgegenhaltungen:
- DE-A- 2 153 087
- GB-A- 1 026 875

## Beschreibung

Organische Buntpigmente fallen bei der Synthese in der Regel in einer für die Anwendung unbrauchbaren Form an. So erhält man z.B. Kupferphthalocyanine - je nach Herstellungsverfahren - in Nadeln von 10 bis 100 µm Länge, die in einem anschließenden "Finish" erst in eine coloristisch und anwendungstechnisch wertvolle Kristallform gebracht werden müssen. Neben der Behandlung mit konzentrierter Schwefelsäure ist die Salzmahlung eine der altesten und auch heute noch genutzten Finishoperationen. Dabei werden die groben Teilchen in Gegenwart der mehrfachen Menge an Steinsalz in Kugelmühlen gemahlen und so zu kompakten und isometrischen Pigmentteilchen formiert. Letztere geben erst die optimale Coloristik. Bei der Salzmahlung wirken Mahlhilfsmittel insbesondere in Gegenwart aromatischer Flüssigkeiten kristallisationsfördernd. Diese steuern die Kristallform und -größe und führen zudem die bei der hohen mechanischen Beanspruchung entstehenden energiereicheren Kristallmodifikationen teilweise bis vollständig in energieärmere Formen zurück. So können z.B. beim Kupferphthalocyanin je nach der Verfahrensvariante gezielt reine α- und β-Kupferphthalocyanine oder auch Gemische aus α- und β-Kupferphthalocyaninen erhalten werden.

Aus sicherheitstechnischen Gründen müssen diese Flüssigkeiten eine möglichst hohe Zündtemperatur haben, wie sie chlorierte Benzole besitzen, z.B. o-Dichlorbenzol mit 640°C oder 1,2,4-Trichlorbenzol mit 570°C.

Diese Halogenbenzole haben jedoch eine Reihe von Nachteilen: sie riechen stark; sie sind wasserdampfflüchtig - was zu Belästigung bei der Aufarbeitung führt -; als Aromaten haben sie eine starke Affinität zum organophilen Pigment, so daß das Pigment eine gewisse Menge an diesen Mitteln auch noch nach der Aufarbeitung enthält; und - was besonders gravierend ist - sie sind im Abwasser schwer abbaubar, d.h. das Abwasser muß besonders entsorgt werden. So enthalten β-Kupferphthalocyaninpigmente, die nach dem Salzmahlverfahren in Gegenwart von Trichlorbenzol hergestellt werden, bis zu 0,7 Gew.% an dem Chlorkohlenwasserstoff. Die in dem Pigment enthaltenen aromatischen Chlorkohlenwasserstoffe können bei der Herstellung von Lacken stören.

In der DE-A-21 53 087 ist das Kneten von Perylenpigmenten in Gegenwart von Natriumchlorid und Dibutylphthalat beschrieben.

Aufgabe der vorliegenden Erfindung war es, weitere für das Salzmahlverfahren geeignete Hilfsmittel bereitzustellen, welche die Nachteile der Hilfsmittel des Standes der Technik nicht aufweisen.

Diese Aufgabe wird dadurch gelöst, daß die als Hilfsmittel des Standes der Technik verwendeten aromatischen Chlorkohlenwasserstoffe durch die erfindungsgemäßen Flüssigkeiten ersetzt werden. Dementsprechend betrifft die Erfindung ein Verfahren zur Herstellung farbstarker und kornweicher Lackpigmente durch Mahlen der Rohpigmente mit einem anorganischen Mahlhilfsmittel in Gegenwart einer organischen Flüssigkeit in Kugelmühlen oder entsprechend wirkenden Zerkleinerungsmaschinen, das dadurch gekennzeichnet ist, daß das Mahlen in Gegenwart von Phthalsäuredialkylestern, von Phenoxyethanol, 2-Phenylethanol, Benzoesäure-C₁-C₄-alkylestern oder Gemischen davon als organischer Flüssigkeit erfolgt.

Die erfindungsgemäß zu verwendenden Mittel haben hohe Zündtemperaturen, z.B. Phenylethanol 410°C; Phthalsäuredimethylester 470°C, der Dibutylester 390°C, der Diisobutylester 425°C; Benzoesäuremethylester 518°C und 2-Phenoxyethanol 535°C.

Nach dem Verfahren erhält man farbstarke und leicht dispergierbare Lackpigmente.

Als Phthalsäuredialkylester kommen vorzugsweise solche von C₁-C₁₅-Alkanolen und Alkoxyalkanolen, insbesondere von C₁-C₈-Alkanolen und Alkoxyalkanolen in Betracht. Im einzelnen sind als Alkyl- und Alkoxyalkyl-Reste z.B. zu nennen: Methyl, Ethyl, Butyl, Isobutyl, 2-Ethylhexyl, Octyl, Nonyl, Decyl, Isodecyl, Isotridecyl, Methoxyethyl, Ethoxyethyl und Butoxyethyl.

Besonders bevorzugt ist Phthalsäuredimethylester.

Von den Benzoesäure-C₁-C₄-alkylestern ist der Methylester aus wirtschaftlichen Gründen bevorzugt.

Als Rohpigmente kommen solche in Betracht, die nach dem Stand der Technik nach dem Salzmahlverfahren in Gegenwart von chlorierten aromatischen Flüssigkeiten hergestellt werden.

Als Ausgangsrohpigmente kommen z.B. in Betracht: Kupferphthalocyanine, die bis zu 6 Gew.% Chlor und gegebenenfalls noch bis zu 1 Gew.% Schwefel in Form von Sulfonsäuregruppen enthalten können, polycyclische Verbindungen wie Flavanthron, Pyranthron und Indanthron.

Das Salzmahlverfahren wird in an sich üblicher Weise durchgeführt, nur daß als organische Flüssigkeit die genannten verwendet werden. Die Menge an den erfindungsgemäßen Flüssigkeiten liegt bei mindestens 0,5 Gew.%, bezogen auf das Rohpigment. Die obere Grenze liegt bei 20 Gew.%. Vorteilhafterweise wird man 1 bis 10 Gew.% , bezogen auf das Rohpigment, an diesen Flüssigkeiten anwenden. Die optimalen Mengen an den organischen Flüssigkeiten sind vom Rohpigment abhängig und können durch Mahlversuche leicht ermittelt werden. Hierzu werden die erhaltenen Pigmente coloristisch im Lack hinsichtlich der Farbstärke (Dispergierbarkeit) , der Reinheit des Farbtons der Färbung und des Glanzes geprüft.

Das Verfahren soll durch die folgenden Ausführungsbeispiele zusätzlich erläutert werden. Die angegebenen Teile und Prozentangaben beziehen sich auf das Gewicht.

### Beispiel 1

15 Teile Rohkupferphthalocyanin (Chlorgehalt: 2,7 %) werden mit 120 Tl. Kochsalz und 1,5 Tl. Dimethylphthalat in einem 750 ml Stahltopf einer Laborschwingmühle, gefüllt mit 1500 Tl. Stahlkugeln (20 mm ⌀) etwa 30 Stunden lang bei Temperaturen von 100 bis 110°C vermahlen. Der Mahlansatz wird in 800 Tl. 70°C heißes Wasser, das 10 Tl. konz. Salzsäure enthält, eingetragen und die Suspension gerührt. Das Pigment wird abgesaugt, ionenfrei gewaschen und getrocknet.

Ausbeute: 14,5 Teile Kupferphthalocyaninpigment, das hervorragend zum Pigmentieren von Lacken geeignet ist. Das Pigment ist etwas lasierender und kornweicher als das Pigment des Vergleichsbeispiels 1 (= Stand der Technik).

### Vergleichsbeispiel 1

Es wurde wie in Beispiel 1 gearbeitet, jedoch wurde das Dimethylphthalat durch die gleiche Menge an Trichlorbenzol ersetzt. Es wurde ein Blaupigment gleicher Coloristik erhalten, das im Vergleich zum Pigment des Beispiels 1 etwas weniger lasierend und etwas kornhärter ist.

### Beispiele 2 und 3

Es wurde wie in Beispiel 1 gearbeitet, jedoch wurde das Dimethylphthalat durch Di-n-butylphthalat (Beispiel 2) bzw. durch Di-isobutyl-phthalat (Beispiel 3) ersetzt. Die erhaltenen Lackpigmente besitzen praktisch die gleichen koloristischen Eigenschaften wie das nach Beispiel 1 erhaltene Pigment.

### Beispiel 4

20 Teile eines Rohkupferphthalocyanins (ca. 4,5 % Chlor) , das außerdem 0,4 % Schwefel in Form von Sulfogruppen im Molekül enthält, werden mit 160 Tl. Kochsalz und 2 Tl. Diethylphthalat in der in Beispiel 1 beschriebenen Mühle 40 Stunden bei etwa 100°C gemahlen. Nach üblicher Entsalzung erhält man 19,5 Teile Lackpigment, das im Vergleich zu dem Pigment des Standes der Technik (= Vergl. Beispiel 2) ein wenig farbstärker ist und eine geringere Kornhärte und eine höhere Lasur aufweist.

### Vergleichsbeispiel 2

20 Teile des im Beispiel 4 verwendeten Rohkupferphthalocyanins (4,5 % Chlor), das zudem noch 0,4 % Schwefel in Form von Sulfogruppen im Molekül enthält, werden mit 160 Tl. Kochsalz und 2 Tl. o-Dichlorbenzol in der in Beispiel 1 beschriebenen Mühle 40 Stunden lang bei etwa 100°C gemahlen. Nach üblicher Entsalzung erhält man 19,5 Teile eines Lackpigments.

### Beispiel 5 bis 9

Es wird wie in Beispiel 4 gearbeitet. Jedoch wird anstelle von Di-ethylphthalat die gleiche Menge der folgenden Ester verwendet:
- Beispiel 5:: Dimethyl-phthalat
- Beispiel 6:: Di-2-ethyl-hexyl-phthalat
- Beispiel 7:: Di-isodecylphthalat
- Beispiel 8:: Di-methoxyethyl-phthalat
Die gewonnenen Lackpigmente besitzen praktisch die gleiche Coloristik wie das nach Beispiel 4 erhaltene Pigment. Die Pigmente entsprechen in der Farbstärke, der Dispergierbarkeit und der Lasur dem Pigment des Beispiels 4.

### Beispiel 9

In der in unter Beispiel 1 beschriebenen Schwingmühle werden 20 Teile Flavanthron, 120 Tl. Kochsalz und 0,4 Teile Dimethylphthalat 36 Stunden lang bei ca. 75°C gemahlen. Nach der üblichen Aufarbeitung resultieren 19,5 Teile eines kornweichen gelben Lackpigmentes, das Färbungen mit höherer Farbstarke und höherer Reinheit des Farbtons liefert als das Pigment des Vergleichsbeisiels 3 (Stand der Technik).

### Vergleichsbeispiel 3

Es wurde wie in Beispiel 9 angegeben verfahren, jedoch wurden anstelle von Dimethylphthalat 0,4 Teile Trichlorbenzol verwendet. Nach dem Aufarbeiten erhält man ein Gelbpigment, das gegenüber den nach den Beispielen 9 und 14 erhältlichen Pigmenten Färbungen mit deutlich geringerer Farbstärke und Sättigung liefert.

### Beispiel 10

15 Teile Rohkupferphthalocyanin (Chlorgehalt ca. 2,7 %) werden mit 120 Teilen Kochsalz und 1,5 Teilen 2-Phenoxyethanol in einem 750 ml Stahltopf mit 1500 Teilen Stahlkugeln (∼20 mm ⌀) 30 Stunden lang bei 110°C gemahlen. Das Mahlgut wurde in 800 Teilen 70°C heißem Wasser, das 10 Teile konz. Salzsäure enthält, entsalzt, das Pigment abgesaugt, mit Wasser ionenfrei gewaschen und getrocknet. Man erhält ein Lackpigment, das im Vergleich zum Pigment des Standes der Technik (= Vergl.Beisp. 1) ein wenig farbstärkere und reinere Färbungen gibt.

### Beispiel 11 und 12

Es wurde wie in Beispiel 10 angegeben verfahren, jedoch wurde das 2-Phenoxyethanol durch die gleiche Menge Benzoesäuremethylester (Beispiel 11) oder Phenylethanol (Beispiel 12) ersetzt. Nach dem Aufarbeiten erhält man Blaupigmente, welche die gleiche Coloristik wie das nach Beispiel 10 erhaltene Pigment aufweisen.

### Beispiel 13

9 Teile eines Rohkupferphthalocyanins mit 4,5 % Chlor, das außerdem 0,4 % Schwefel in Form von Sulfogruppen im Molekül enthält, werden mit 72 Teilen Kochsalz und 0,9 Teilen Phenoxyethanol in der in Beispiel 1 beschriebenen Mühle 24 Stunden bei 100°C gemahlen. Nach üblichem Entsalzen erhält man 19,5 Teile eines Lackpigments, das im Vergleich zum Pigment des Standes der Technik (= Vergl.Beisp. 2) etwas farbstärkere und lasierendere Färbungen liefert.

### Beispiel 14

In der in Beispiel 10 beschriebenen Schwingmühle werden 20 Teile Flavanthron, 120 Teile Kochsalz und 0,2 Teile Phenoxyethanol 36 Stunden bei 75°C gemahlen. Nach der üblichen Aufarbeitung resultieren 19,5 Teile eines gelben Lackpigments, das Färbungen mit deutlich höherer Farbstärke und Sättigung liefert als das Pigment des Vergleichsbeispiels 3.

## Patentansprüche

1. Verfahren zur Herstellung farbstarker und kornweicher Lackpigmente durch Mahlen der Rohpigmente mit einem anorganischen Mahlhilfsmittel in Gegenwart einer organischen Flüssigkeit in Kugelmühlen oder entsprechend wirkenden Zerkleinerungsmaschinen, dadurch gekennzeichnet, daß das Mahlen in Gegenwart von Phthalsäuredialkylestern, von Phenoxyethanol, 2-Phenylethanol, Benzoesäure-C₁-C₄-alkylestern oder Gemischen davon als organischer Flüssigkeit erfolgt.

2. Verfahren gemäß Anspruch 1, dadurch gekennzeichnet, daß man - bezogen auf das Rohpigment - 0,5 bis 20 Gew.% an organischer Flüssigkeit anwendet.

3. Verfahren gemäß Anspruch 2, dadurch gekennzeichnet, daß man 1 bis 10 Gew.% der Flüssigkeit anwendet.

## Claims

1. A process for preparing a strong and soft-textured surface coating pigment by grinding the crude pigment together with an inorganic grinding aid in the presence of an organic liquid in a ball mill or a corresponding comminutor, which comprises grinding in the presence of a phthalic diester, phenoxyethanol, 2-phenyl-ethanol, a C₁-C₄-alkyl benzoate or a mixture thereof as the organic liquid.

2. A process as claimed in claim 1, wherein from 0.5 to 20% by weight of organic liquid is used based on the crude pigment.

3. A process as claimed in claim 2, wherein from 1 to 10% by weight of liquid is used.

## Revendications

1. Procédé de préparation de pigments de laque à pouvoir colorant et de consistance molle granuleuse, par broyage des pigments bruts avec un auxiliaire de broyage inorganique en présence d'un liquide organique dans un broyeur à galets ou dans des machines de broyage à effet similaire, caractérisé en ce que le broyage est effectué en présence de phtalates de dialkyle, de phénoxyéthanol, de 2-phényléthanol, de benzoates d'alkyle en C₁-C₄ ou de mélanges de ceux-ci en tant que liquide organique.

2. Procédé selon la revendication 1, caractérisé en ce que l'on utilise 0,5 à 20% en poids de liquide organique par rapport au pigment brut.

3. Procédé selon la revendication 2, caractérisé en ce que l'on utilise 1 a 10% en poids du liquide.
